# EUROPEAN PATENT SPECIFICATION

(11) **EP 2 230 954 B1**
(45) Date of publication and mention of the grant of the patent: **22.02.2012**
(21) Application number: 09702472.3
(22) Date of filing: 12.01.2009
(51) Int. Cl.: A43B 7/32, A43B 7/34, A43B 7/12, A43B 13/41, A43B 13/12, B29D 35/14

(54) **SEMI-FINISHED MONOBLOCK FOR COLD WEATHER FOOTWEAR MOULDED WITH TWO OR MORE MATERIALS AND DIRECTLY WITH INTERNAL INSOLE**
HALBZEUG-MONOBLOCK FÜR EINEN AUS ZWEI ODER MEHR MATERIALIEN GEFORMTEN KALTWETTERSCHUH MIT ZUSÄTZLICHER INNENSOHLE
MONOBLOC SEMI-FINI POUR CHAUSSURE POUR TEMPS FROID, MOULÉ AVEC DEUX OU PLUSIEURS MATÉRIAUX ET DIRECTEMENT AVEC LA PREMIÈRE INTERNE

(30) Priority: 16.01.2008 IT MC20080008
(43) Date of publication of application: 29.09.2010
(73) Proprietor: AL.PI. S.R.L., 62012 Civitanova Marche (MC) (IT)
(72) Inventor: BIANCUCCI, Demetrio, I-62012 Civitanova Marche (MC) (IT); BRASCA, Alfredo, I-62012 Civitanova Marche (MC) (IT)
(74) Representative: Statti, Francesco
(86) International application number: PCT/EP2009/000106
(87) International publication number: WO 2009/090022

(56) References cited:
- FR-A- 2 504 786
- GB-A- 2 146 282
- US-A- 5 802 740
- US-A1- 2001 016 992
- US-A1- 2007 107 257

## Description

### Field of invention

The present invention concerns the footwear industry and more specifically it concerns a semi-finished monoblock for cold weather footwear made with two or more materials and directly moulded to an internal insulating insole and subsequently glued or moulded to an external sole chosen according to the aesthetic and functional requirements of the user and in such a way as to produce a cold weather shoe with functional and aesthetic characteristics that are better than those currently available on the market and with the possibility for them to be moulded also with the accessories required by the relevant legislation covering the specific use for which the cold weather shoe has been designed.

### Background

The shoes that are used in cold climates generally consist of a semi-finished element, called a monoblock, the interior of which is then insulated in order to protect the foot from low temperatures.

The aforementioned semi-finished monoblock, to the upper part of which the leg of the shoe upper is applied, or it is glued to a sole made of a different material from the insulating semi-finished element or it is directly moulded to the sole, fitting different materials within its interior in order to increase the foot's protection from the cold outside.

If on the one hand the aforementioned semi-finished monoblock of a cold weather shoe guarantees the insulation of its own interior, on the other it conditions and limits the design of the shoe which depends on the type of insulating material with which it has been made.

In fact, although on the one hand the direct moulding of the sole to the monoblock guarantees effective waterproofing, on the other it limits the choice of the type of tread, since the tread sole is an integral part of the mould. With a view to avoiding the aforementioned problem, the current method employed is to use a semi-finished monoblock that is moulded in one material only, devoid of bottom or tread sole to which an insole is inserted with a special type of stitching technically known as a *strobel* stitch. The semi-finished monoblock thus obtained is subsequently glued to a tread sole and then finished off with the application on its upper part of the leg of the upper. The aforementioned second type of monoblock is conditional on the single material with which it is moulded and by the choice of the insulating materials which obstruct the realisation of excellent finishes of the cold weather shoe.

Another problem with the aforementioned type of monoblock is that it must be stitched to an internal insole which, in addition to involving an additional production cost, does not guarantee total waterproofing and insulation of the foot, for which reason a further hygienic insole or *fusbett* has to be inserted inside the aforementioned monoblock.

Another problem of both of the aforementioned types of semi-finished monoblocks available on the market today is that the choice of the materials is made either with a view to obtaining good insulation, to the detriment of the shoe's aesthetic appearance, or with a view to obtaining good physical-mechanical characteristics, to the detriment, in the latter case, of the insulation, so it is not possible today to obtain a monoblock for cold weather footwear that provides both excellent insulation and an aesthetic appearance to suit the user's taste.

The above-described monoblocks for cold weather footwear do not appear to be protected by any kind of design right, the only one found by the applicant company being USA Patent No. US5802740(A), published on 08 September 1998, which in any case claims a method for insulating the foot from water that is totally different from the one claimed by the present patent.

A semi-finished monobloc for a winter boot is known from US-A-2007/107257. The monobloc is moulded with two or more materials, and cushioning insole is inserted inside.

### Disclosure of invention

It is this patentable subject-matter to resolve the problems currently referred to by proposing a semi-finished monoblock for cold weather footwear moulded with two or more materials, each of which having its own characteristics both aesthetic and technical so as to provide the shoe with improved functionality and versatility.

Further, this invention has the aim of providing a semi-finished monoblock for cold weather footwear moulded directly with the internal insole in order to make it totally waterproof and perfectly insulated, eliminating the need for the hygienic insole or *fusbett* and its *strobel* stitching, thereby simplifying the production process and reducing the cost of production of the cold weather shoe.

Further, this invention has the aim of providing a semi-finished monoblock for cold weather footwear, the design and functionality of which no longer depend on the insulating material with which the monoblock has been moulded.

Further, this invention has the aim of providing a semi-finished monoblock for cold weather footwear that can directly accommodate within its interior during the moulding phase specific technical devices such as the accident-prevention devices envisaged by the safety standards laid down for safety footwear, so as to allow considerable savings in their production costs. Further, this invention has the aim of providing a semi-finished monoblock for cold weather footwear that can isolate and insulate all sides of the foot, the realisation of which takes place directly during the moulding phase alone. Not the last patentable subject-matter is to obtain a semi-finished monoblock for cold weather footwear with better technical, aesthetic and functional characteristics than those presently available on the market.

These and other objects are achieved according to the invention that is the object of the present application which concerns a semi-finished monoblock for cold weather footwear moulded with two or more materials chosen for their specific aesthetic, technical and functional characteristics which allow the direct moulding to an internal insole so as to guarantee total insulation and waterproofing of its interior and the subsequent gluing or moulding of the monoblock with its moulded internal insole to the external sole, the choice of tread material and design for which may be made by the user on the basis of his/her aesthetic and functional requirements with regard to resistance, abrasion, better grip, lighter weight etc. according to the conditions to which the shoe is likely to be exposed.

According to the specific use of the shoe, such as for example safety footwear, the invention that is object of the present application presents the variation of permitting the monoblock to be moulded directly with the accessories required by accident-prevention legislation for safety footwear, such as the fitting of reinforced or crush-resistant toe caps or of an internal anti-perforation insole.

### Detailed description

Further features and advantages of the invention shall be better understood from the description of a preferred but not exclusive embodiment of the present application, illustrated by way of indicative but non-limiting example in the accompanying drawings in which:

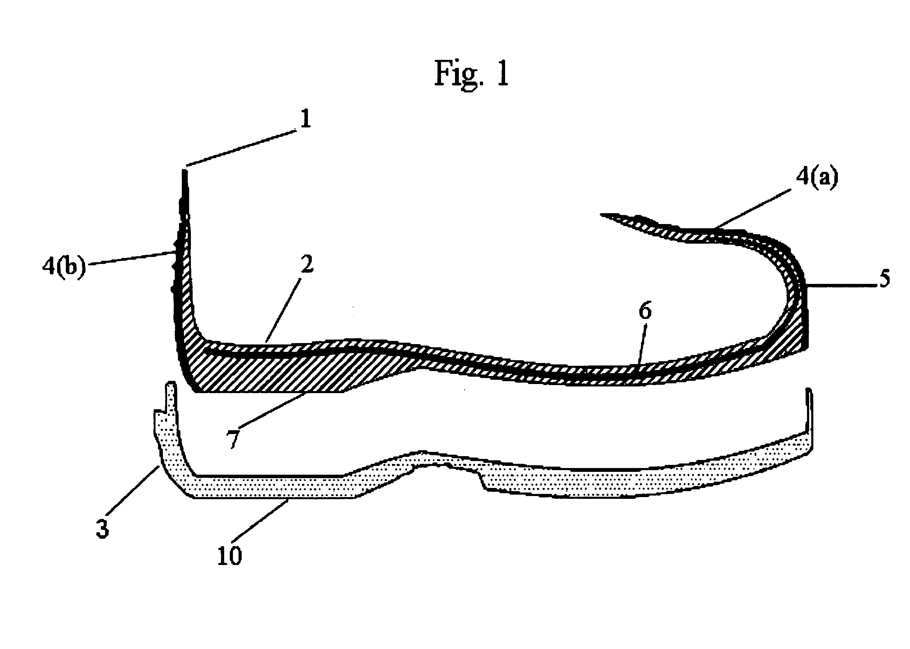

Fig.1 shows a side cross-section of the monoblock that is the object of the present application;

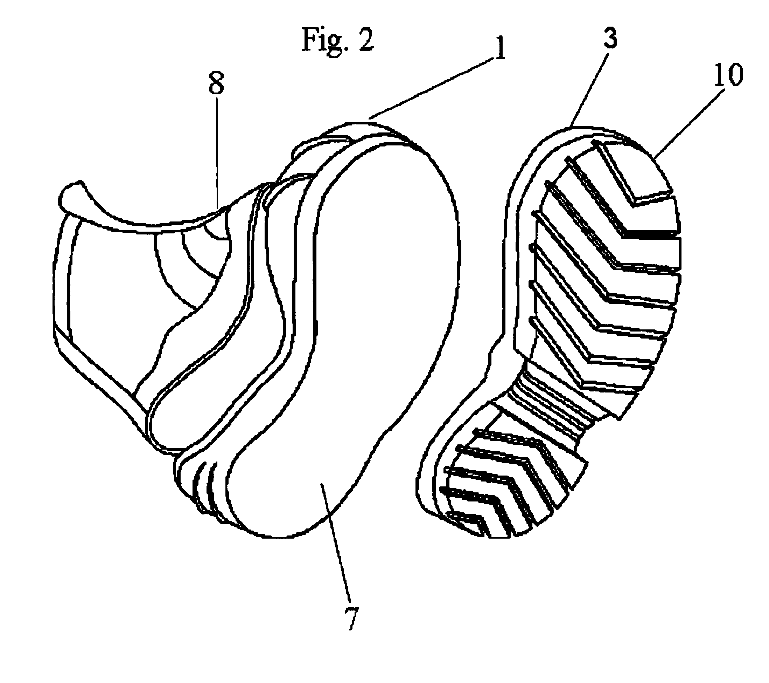

Fig. 2 is a side view of the semi-finished monoblock detached from the external bottom and from the leg of the upper;

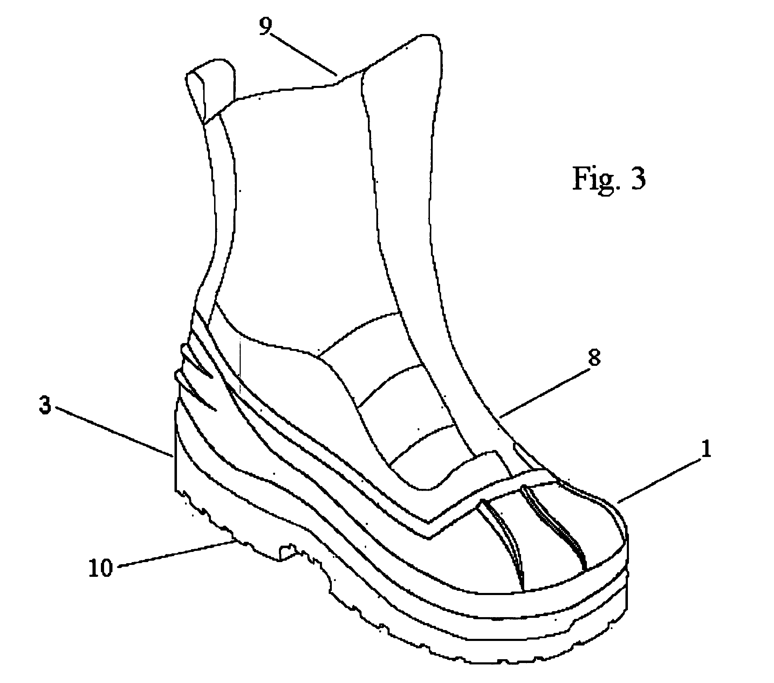

Fig. 3 is a view of the finished cold weather shoe.

The invention that is the object of the present application is a semi-finished monoblock (1) for cold weather footwear (9) moulded with two or more materials that, depending on the use for which the said type of shoe is designed, may be equipped directly also with accessories that improve its performance and that are envisaged by the appropriate accident-prevention legislation required, for example, for safety footwear.

Two materials are usually employed to make the monoblock, but more than two may be used and they may be chosen for each part of the monoblock. Thus in the internal part of the monoblock, the material (2) chosen will have the characteristic of being an expanded and/or insulating type of material in order to isolate the foot from the harsh external temperatures, while for its external part materials (4/a) and (4/b) with aesthetic and technical characteristics will be chosen in order to facilitate its assembling to the tread sole (3) of the monoblock (1), for the moulding of which harder or softer materials will be employed depending on the use for which the finished product is designed, or that guarantee the specific characteristics required by the final use of the shoe (9).

The insulation of the semi-finished monoblock (1) is ensured by the insulating materials (2) moulded inside it that totally envelop the foot in order to guarantee the total waterproofing of its interior.

The external sole (3) with its tread (10), for which the materials most suitable for obtaining the specific characteristics required for its final use will be chosen, is then glued or moulded to the semi-finished monoblock (1) moulded directly with its internal insole (7).

The semi-finished monoblock (1) of this invention also provides for the possibility of being directly equipped with the accessories required by the accident-prevention legislation for safety footwear, such as an anti-perforation insole (6) or a reinforced, crush-resistant toe cap (5).

Using various types of fastening (gluing, stitching, welding etc.) the top leg of the upper (8) is fitted on the monoblock (1) with a view to obtaining the cold weather shoe (9) composed of its three main elements: the leg (8) which is the uppermost part of the shoe, the external sole (3) with its tread (10), the semi-finished monoblock (1) as described above.

The materials and the dimensions of the invention as further illustrated in the accompanying drawings and later claimed, may be varied according to requirements. Moreover, all the details may be replaced by other technically equivalent ones without for this reason straying from the protective scope of the present invention patent application, as defined by the claims.

## Claims

1. Semi-finished monoblock (1) for cold weather footwear (9) for the purpose of providing effective insulation and waterproofing of the foot with the peculiarity that the said monoblock (1) is moulded with two or more materials directly with the internal insole (7) so as to guarantee total insulation and waterproofing of its interior.

2. Semi-finished monoblock (1) for cold weather footwear (9) as claimed in claim 1 **characterised by** the fact that the two or more materials with which it is moulded have been chosen in function of the specific aesthetic and technical characteristics required by the use of the cold weather shoe (9), adopting for the external part of the monoblock (1) materials (4/a) and (4/b) determined by the various aesthetic requirements and for the internal part of the monoblock (1) insulating materials (2) in order to guarantee the thermal insulation of the foot.

3. Semi-finished monoblock (1) for cold weather footwear (9) as claimed in claims 1, 2 **characterised by** the fact that its direct moulding with the internal insole (7) determines cost savings in terms of other accessory materials and reduces production time by eliminating the *strobel* stitching phase.

4. Semi-finished monoblock (1) for cold weather footwear (9) as claimed in claims 1, 2, 3 **characterised by** the fact that it can be directly moulded with special technical devices such as those for accident prevention envisaged for safety footwear, such as a reinforced or crush-resistant toe cap (5) or an anti-perforation insole (6) or other device, so as to enable considerable savings in the production costs of the finished product.

## Patentansprüche

1. Halbzeug-Monoblock (1) für Kaltwetterschuhe (9) zur wirksamen Isolierung des Fußes und zur Wasserundurchlässigkeit, mit der Besonderheit, dass der genannte Monoblock (1) aus zwei oder mehr Materialien direkt mit der Innensohle (7) geformt wurde, um die vollkommene Isolierung und Wasserundurchlässigkeit der Innenseite zu gewährleisten.

2. Halbzeug-Monoblock (1) für Kaltwetterschuhe (9) nach Anspruch 1, **dadurch gekennzeichnet, dass** die Auswahl der zwei oder mehr Materialien, aus denen dieser geformt wird, unter Beachtung der für die jeweilige Anwendung des Kaltwetterschuhs (9) erforderlichen spezifischen ästhetischen und technischen Eigenschaften erfolgt, wobei Materialien (4/a) und (4/b) für den Außenteil des Monoblocks (1) aufgrund von verschiedenen ästhetischen Anforderungen und isolierende Materialien (2) für den Innenteil des Monoblocks (1) zur Gewährleistung der thermischen Isolierung des Fußes gewählt werden.

3. Halbzeug-Monoblock (1) für Kaltwetterschuhe (9), nach Anspruch 1 und 2, **dadurch gekennzeichnet, dass** dessen direkte Formung mit der Innensohle (7) im Bezug auf die Verwendung von zusätzlichen Materialien zu einer Kosteneinsparung und durch Wegfallen des Strobel-Vorgangs zu einer Verkürzung der Produktionszeit führt.

4. Halbzeug-Monoblock (1) für Kaltwetterschuhe (9), nach Anspruch 1, 2 und 3, **dadurch gekennzeichnet, dass** er direkt mit speziellen Schutzvorrichtungen, beispielsweise zur Unfallverhütung, wie verstärkte oder quetschsichere Schutzkappen (5) oder durchtrittsichere Innensohlen (6) o.a., geformt werden kann, wodurch erhebliche Einsparungen bei den Produktionskosten erreicht werden können.

## Revendications

1. Monobloc semi-fini (1) pour chaussure pour temps froid (9) destiné à assurer une isolation et une imperméabilité efficaces du pied, ayant la particularité que ledit monobloc (1) est moulé avec deux matériaux ou plus d'un seul tenant avec la semelle intérieure (7) de manière à garantir l'isolation et l'imperméabilité totales de sa partie intérieure.

2. Monobloc semi-fini (1) pour chaussure pour temps froid (9) selon la revendication 1 **caractérisé en ce que** les deux matériaux ou plus avec lesquels il est moulé ont été choisis en fonction de caractéristiques esthétiques et techniques spécifiques requises par l'utilisation de la chaussure pour temps froid (9), en adoptant pour la partie extérieure du monobloc (1) des matériaux (4/a) et (4/b) déterminés par les diverses exigences esthétiques et pour la partie intérieure du monobloc (1) des matériaux isolants (2) permettant de garantir l'isolation thermique du pied.

3. Monobloc semi-fini (1) pour chaussure pour temps froid (9) selon les revendications 1 et 2 **caractérisé en ce que** son moulage d'un seul tenant avec la semelle intérieure (7) permet de réaliser des économies de coûts en ce qui concerne les autres matériaux accessoires et de réduire le temps de production en éliminant la phase de couture *strobel*.

4. Monobloc semi-fini (1) pour chaussure pour temps froid (9) selon les revendications 1, 2 et 3 **caractérisé en ce qu'**il peut être moulé d'un seul tenant avec des dispositifs techniques spéciaux tels que ceux destinés à la prévention des accidents envisagés pour les chaussures de sécurité, tels qu'un bout protecteur renforcé ou résistant à l'écrasement (5), une semelle intérieure anti-perforation (6) ou un autre dispositif, ce qui permet de réaliser des économies considérables quant aux coûts de production du produit fini.
